# EUROPÄISCHE PATENTSCHRIFT

(11) **EP 2 815 135 B1**
(45) Veröffentlichungstag und Bekanntmachung des Hinweises auf die Patenterteilung: **24.07.2019**
(21) Anmeldenummer: 13709727.5
(22) Anmeldetag: 12.02.2013
(51) Int. Cl.: F15B 15/16, F15B 20/00, B66C 23/80, B66C 23/90, G01L 1/02, B60S 9/12, G01L 11/02

(54) **ABSTÜTZVORRICHTUNG FÜR EIN FAHRZEUG**
SUPPORT DEVICE FOR A VEHICLE
DISPOSITIF D'APPUI POUR UN VÉHICULE

(30) Priorität: 13.02.2012 AT 492012 U
(43) Veröffentlichungstag der Anmeldung: 24.12.2014
(73) Patentinhaber: Palfinger AG, 5101 Bergheim bei Salzburg (AT)
(72) Erfinder: WIMMER, Eckhard, A-5322 Hof bei Salzburg (AT)
(74) Vertreter: Torggler & Hofinger Patentanwälte
(86) Internationale Anmeldenummer: PCT/AT2013/000024
(87) Internationale Veröffentlichungsnummer: WO 2013/120118

(56) Entgegenhaltungen:
- EP-A1- 0 482 298
- JP-A- H06 193 038

## Beschreibung

Die Erfindung betrifft eine hydraulisch teleskopierbare Abstützvorrichtung für ein Fahrzeug - insbesondere für einen fahrbaren Ladekran -, mit einer hydraulisch bewegbaren Kolben-Zylinder-Einheit zum Aus- und Einfahren der Abstützvorrichtung und einem Hydrauliksystem mit einem ersten Hydraulikkreis zum Bewegen der Kolben-Zylinder-Einheit und einer hydraulischen Kraftmessvorrichtung zur Ermittlung der Abstützkraft die auf die Abstützvorrichtung wirkt.

Weiters betrifft die Erfindung ein Fahrzeug, insbesondere einen fahrbaren Ladekran, mit wenigstens einer hydraulisch teleskopierbaren Abstützvorrichtung der beschriebenen Art.

Die Ermittlung der Stützkraft bei Abstützvorrichtungen von Fahrzeugen ist vom Stande der Technik heraus bereits bekannt. Eine Möglichkeit, diese Stützkraft zu messen, kann über elektrische bzw. elektronische Kraftmesseinrichtungen erfolgen, die vorzugsweise im Stützteller, d.h. in der Nähe des Angriffspunktes der Stützkraft angeordnet sind. Ein Nachteil dieser Methode sind die hohen Kosten der Messeinrichtung und die Verkabelung nach oben, vom Stützteller hin zum Bereich der Zylinderbefestigung.

Eine weitere Methode zur Stützkraftermittlung ist eine Druckmessung im Zylinder selbst (kolben- und stangenseitig). Aus den gemessen Drücken kann auf die Stützkraft rückgerechnet werden. Diese Methode ist wesentlich kostengünstiger als die oben beschriebene. Nachteilig ist dabei die Reibung der Kolbenstangenlagerung, die besonders bei voll ausgefahrener Kolbenstange und bei Auftreten von Seitenkräften sehr groß sein kann. Die Stützkraft geht dann zum Teil über diese Lagerstellen in die Anschlusskonstruktion und der Druck im Zylinder repräsentiert nicht mehr die tatsächlich auftretende Stützkraft.

Aus der JP H06 193038 A ist beispielsweise ein Vorrichtung zur Überprüfung der Tragfähigkeit eines Bodengrunds, auf welchem sich ein hydraulisch verstellbarer Stützfuß eines Krans abstützt, bekannt.

Weiter ist aus der EP 0 482 298 A1 eine Nivelliereinrichtung zur zum selektiven Ausfahren von Abstützzylindern bekannt.

Aufgabe der Erfindung ist es, eine gegenüber dem Stand der Technik verbesserte hydraulisch teleskopierbare Abstützvorrichtung anzugeben.

Diese Aufgabe wird durch eine hydraulisch teleskopierbare Abstützvorrichtung mit den Merkmalen des Anspruchs 1 gelöst.

Dadurch, dass die hydraulische Kraftmessvorrichtung einen zumindest während der Ermittlung der Abstützkraft eigenen, vom ersten Hydraulikkreis des Hydrauliksystems unabhängigen, zweiten Hydraulikkreis aufweist, kann das Arbeitsmedium - welches normalerweise Öl ist - während der Ermittlung der Abstützkraft nicht aus dem zweiten unabhängigen und abgeschlossenen Hydraulikkreis entweichen, da zumindest während der Messung keine Verbindung zwischen dem ersten Hydraulikkreis des Hydrauliksystems und dem zweiten Hydraulikkreis des Hydrauliksystems besteht. Somit wird eine genauere Messung erzielbar.

Weitere Vorteile der Erfindung sind in den abhängigen Ansprüchen definiert.

Als besonders vorteilhaft hat es sich herausgestellt, wenn der zweite Hydraulikkreis zumindest teilweise - vorzugsweise im Wesentlichen vollständig - innerhalb der Kolben-Zylinder-Einheit ausgebildet ist. Durch die Ausgestaltung des zweiten Hydraulikkreises innerhalb der Kolben-Zylinder-Einheit der Abstützvorrichtung wird eine besonders kompakte Bauweise für eine hydraulisch teleskopierbare Abstützvorrichtung erzielbar.

Gemäß einem bevorzugten Ausführungsbeispiel kann vorgesehen sein, dass die Kraftmessvorrichtung wenigstens zwei ineinander verschachtelte Rohre aufweist welche teleskopisch zueinander bewegbar ausgebildet sind. Durch die Ausbildung von zwei ineinander verschachtelten Rohren für die Kraftmessvorrichtung kann das Volumen des für die Kraftmessung relevanten Arbeitsmediums (Öl) gering gehalten werden, was sich ebenfalls positiv auf die Genauigkeit der Messung auswirken kann. Weiters kann bevorzugt vorgesehen sein, dass die Kolben-Zylinder-Einheit einen Zylinder, einen Kolben und eine Kolbenstange aufweist, wobei eines der beiden Rohre ortsfest im Zylinder der Kolben-Zylinder-Einheit ausgebildet ist und das zweite Rohr mit einem ersten Ende ortsfest in der Kolbenstange der Kolben-Zylinder-Einheit ausgebildet ist. Somit kann erreicht werden, dass die beiden ineinander verschachtelten Rohre zusammen mit dem Zylinder bzw. der Kolbenstange verfahren.

Besonders bevorzugt kann vorgesehen sein, dass das zweite Rohr mit einem zweiten Ende ortsfest im Kolben der Kolben-Zylinder-Einheit ausgebildet ist. Dadurch wird eine besonders stabile Konstruktion und Befestigung des zweiten Rohres in der Kolben-Zylinder-Einheit erzielbar.

Als vorteilhaft hat es sich weiters herausgestellt, dass die Kraftmessvorrichtung am ersten Ende des zweiten Rohres einen Deckel mit einer Öffnung zu einer in ihrem Volumen veränderlichen Kammer aufweist, wobei der Deckel ortsfest in der Kolbenstange der Kolben-Zylinder-Einheit befestigt ist.

Schutz wird auch begehrt für ein Fahrzeug, insbesondere einen fahrbaren Ladekran, mit wenigstens einer hydraulisch teleskopierbaren Abstützvorrichtung nach wenigstens einer der beschriebenen Ausführungsformen.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:
- Fig. 1a: eine schematische Darstellung einer hydraulisch teleskopierbaren Abstützvorrichtung im eingefahrenen Zustand,
- Fig. 1b: eine schematische Darstellung einer Abstützvorrichtung im ausgefahrenen Zustand während der Ermittlung der Stützkraft,
- Fig. 2: ein Schnitt durch eine Abstützvorrichtung im ausgefahrenen und nicht abgestützten Zustand,
- Fig. 3: eine Detailansicht der Fig. 2,
- Fig. 4: eine Detailansicht einer Abstützvorrichtung im abgestützten Zustand,
- Fig. 5: ein Schnitt durch eine Variante einer Abstützvorrichtung im abgestützten Zustand und
- Fig. 6: eine Seitenansicht eines Fahrzeugs mit Ladekran und mehreren hydraulisch teleskopierbaren Abstützvorrichtungen.

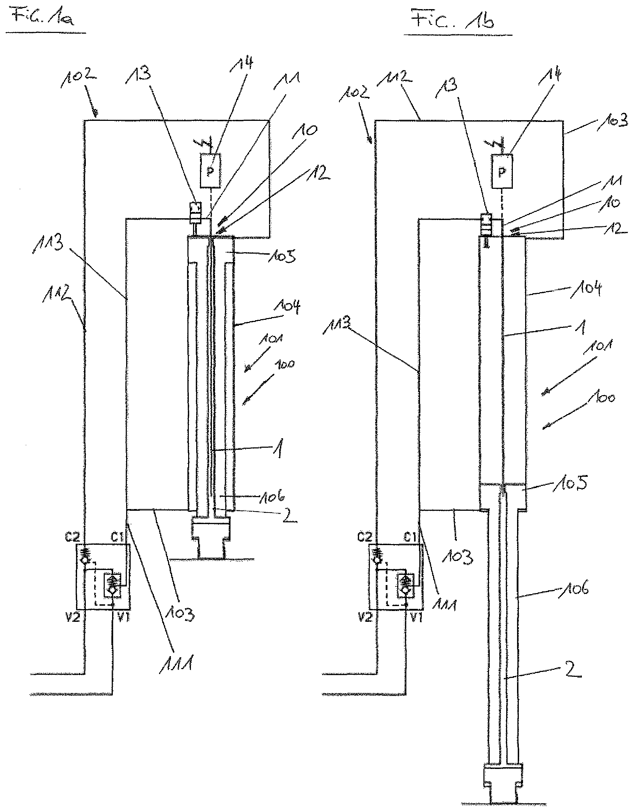

Figur 1a und 1b zeigen eine schematische Darstellung einer hydraulisch teleskopierbaren Abstützvorrichtung 100 für ein Fahrzeug - insbesondere für einen fahrbaren Ladekran - mit einer hydraulisch bewegbaren Kolben-Zylinder-Einheit 101 - bestehend aus dem Zylinder 104, dem Kolben 105 und der Kolbenstange 106 - zum Ein- und Ausfahren der Abstützvorrichtung 100 und einem Hydrauliksystem 102 mit einem ersten Hydraulikkreis 103 zum Bewegen der Kolben-Zylinder-Einheit 101 und einer hydraulischen Kraftmessvorrichtung 10 zur Ermittlung der Abstützkraft, die auf die Abstützvorrichtung 100 wirkt. Dabei weist die hydraulische Kraftmessvorrichtung 10 einen während der Ermittlung der Abstützkraft eigenen, vom ersten Hydraulikkreis 103 des Hydrauliksystems 102 unabhängigen zweiten Hydraulikkreis 11 auf, wie dies in der Figur 1b dargestellt ist.

Die Kolben-Zylinder-Einheit 101 kann dabei über die Ausfahrleitung 112 des Hydrauliksystems 102 ausgefahren und über die Einfahrleitung 111 des Hydrauliksystems 102 eingefahren werden.

Die Trennung des zweiten Hydraulikkreises 11 des Hydrauliksystems 102 vom ersten Hydraulikkreis 103 erfolgt in diesem bevorzugten Ausführungsbeispiel in der Einfahrleitung 111 des Hydrauliksystems 102 durch ein 2/2-Wegeventil 13.

Die Ermittlung der Abstützkraft, die auf die Abstützvorrichtung 100 wirkt, erfolgt dabei an einem ersten Ende 12 des ersten Rohres 1 der Kraftmessvorrichtung 10.

Die wesentlichen Bestandteile der Kraftmessvorrichtung 10 sind folgende:
- der Messaufnehmer 14
- der zweite Hydraulikkreis 11 und dessen Arbeitsmedium
- die beiden ineinander verschachtelten Rohre 1 und 2
- der als Plunger 5 ausgebildete Messkolben 6
- die in ihrem Volumen veränderliche Kammer 4
- der Deckel 3 am Rohr 2.

Der zweite Hydraulikkreis 11 des Hydrauliksystems 102 ist hier als offener Kreis ausgebildet und erstreckt sich im Wesentlichen vom Messaufnehmer 14 zum ersten Rohr 1, weiter zum zweiten Rohr 2 und in die Kammer 4.

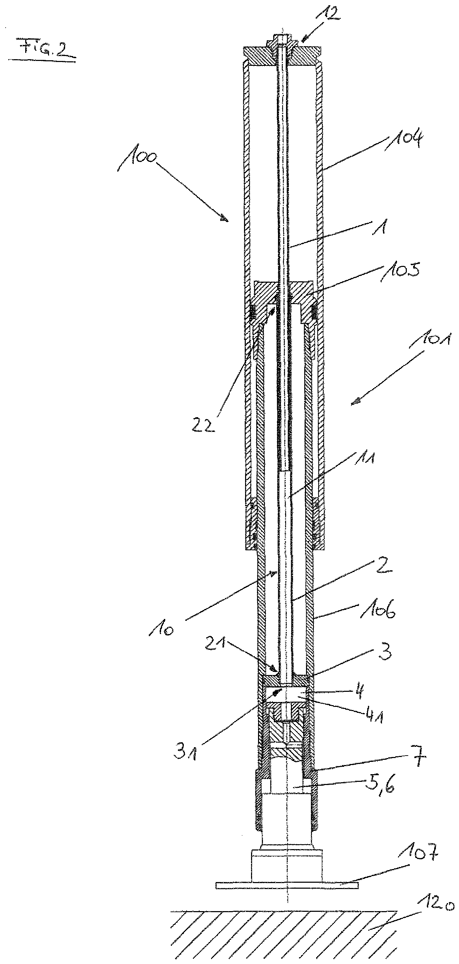

Figur 2 zeigt einen Schnitt durch eine hydraulisch teleskopierbare Abstützvorrichtung 100. Die Abstützvorrichtung 100 weist eine Kolben-Zylinder-Einheit 101 auf mit einem Zylinder 104, einen Kolben 105 und eine Kolbenstange 106. Im Inneren der Kolben-Zylinder-Einheit 101 sind in diesem bevorzugten Ausführungsbeispiel die beiden ineinander verschachtelten Rohre 1 und 2 der Kraftmessvorrichtung 10 ausgebildet. Die beiden verschachtelten Rohre 1 und 2 sind teleskopisch zueinander bewegbar und dicht zur Kolben-Zylinder-Einheit 101 geführt. Dabei ist das Rohr 1 ortsfest im Zylinder 104 der Kolben-Zylinder-Einheit 101 ausgebildet und das zweite Rohr 2 ist mit einem ersten Ende 21 ortsfest in der Kolbenstange 106 der Kolben-Zylinder-Einheit 101 ausgebildet. An seinem zweiten Ende 22 ist das zweite Rohr 2 ortsfest im Kolben 105 der Kolben-Zylinder-Einheit 101 ausgebildet.

Am ersten Ende 21 des zweiten Rohres 2 ist der Deckel 3 mit seiner Öffnung 31 ausgebildet, durch die hindurch das Arbeitsmedium in die in ihrem Volumen 41 veränderliche Kammer 4 gelangt. An die Kammer 4 schließt der als Plunger 5 ausgebildete Messkolben 6 an. Dieser Messkolben 6 ist am unteren Ende der Kolbenstange 106 ausgeführt, welcher in einer von unten in die Kolbenstange 106 eingeschraubte Führungseinheit 7 auf kurzem Weg verschiebbar gelagert ist.

### Zur Funktionsweise:

Durch die Ausbildung von Rohren in der Kolbenstange 106 und dem Zylinder 104, in diesem bevorzugtem Ausführungsbeispiel das erste Rohr 1 und das zweite Rohr 2, welches in diesem Ausführungsbeispiel einen größeren Durchmesser als das Rohr 1 aufweist, kann das Volumen des Hydraulikkreises 11 für die Druckmessung gering gehalten werden, die Kompression des Arbeitsmediums und somit der Weg für die Messung wird damit möglichst kurz gehalten. Das Rohr 2 in der Kolbenstange 106 mündet an ihrem unteren Ende 21 in den Deckel 3, welcher in der Kolbenstange 106 gelagert ist und zum als Plunger 5 ausgebildeten Messkolben 6 sowie zur Kolbenstangeninnenseite hin abgedichtet ist. Der Messkolben 6 ist abgesetzt und ähnlich einer Kolbenstange geführt und nach außen hin abgedichtet.

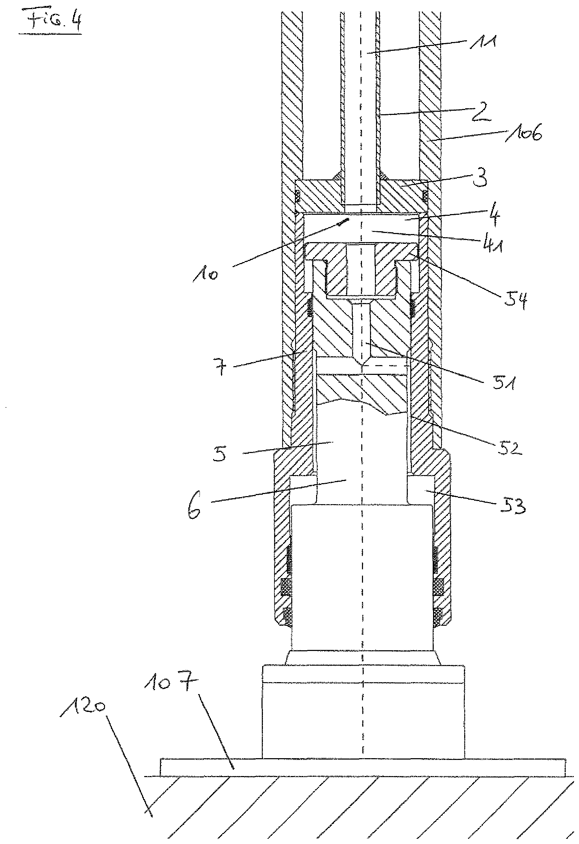

Im Kranbetrieb im abgestützten Zustand (Figur 1b und 4) ist der für die Messung aktive Hydraulikkreis 11 in der Abstützvorrichtung 100 von dem des Fahrzeuges 200 abgekoppelt und wird ausschließlich für die Druckmessung bzw. Stützkraftermittlung verwendet.

Wenn der Stützteller 107 auf den Boden 120 trifft, wird das Arbeitsmedium - welches normalerweise Öl ist - im Hydraulikkreis 11 komprimiert. Über den gemessenen Druck kann damit auf die Stützkraft rückgeschlossen werden.

Die Druckmessung erfolgt dabei bevorzugterweise am oberen Ende 12 des ersten Rohres 1. Das Arbeitsmedium kann während der Messung nicht entweichen, die von der Einfahrleitung 111 des ersten Hydraulikkreises 103 führende Verbindungsleitung 113 ist abgesperrt (durch das 2/2-Wegeventil 13, siehe Figur 1b).

Um Verluste von Hydraulikflüssigkeit bei längerem Betrieb durch Leckage auszugleichen, wird das Ventil 13 in der Verbindungsleitung 113 im eingefahrenen Zustand bzw. kurz davor bei Außerbetriebnahme geöffnet, der Einfahrdruck in die hydraulische Kraftmessvorrichtung 10 freigegeben und der als Plunger 5 ausgebildete Messkolben 6 voll ausgefahren. Bei jeder Außerbetriebnahme (d.h. vollständiges Einfahren der Abstützvorrichtung 100 auf Anschlag) wird damit die hydraulische Kraftmessvorrichtung 10 somit auf einen ursprünglichen Zustand zurückgesetzt.

Die Schaltung des Ventils 13 kann z.B. elektromagnetisch erfolgen.

Ein bereits für die Überwachung der eingefahrenen Stellung vorhandener Näherungsschalter im oberen Bereich des Zylinders 104 kann für das Schaltsignal des Ventils 13 verwendet werden.

Der Einfahrdruck bleibt bei einem völlig dichten System in der Kammer 4 gleich, dieser fällt jedoch bei Ausfahren der Kolben-Zylinder-Einheit 101 kurzfristig durch die Vergrößerung des Volumens bei einem Schließen des Ventils 13 und durch das Herausziehen des Rohres 1 aus dem Rohr 2 wieder ab. Bei weiterem Ausfahren der Kolbenstange 106 - und somit des Rohres 2 - fährt der Messkolben 6 entsprechend der Verringerung des Volumens durch das Herausziehen des Rohres 1 ein.

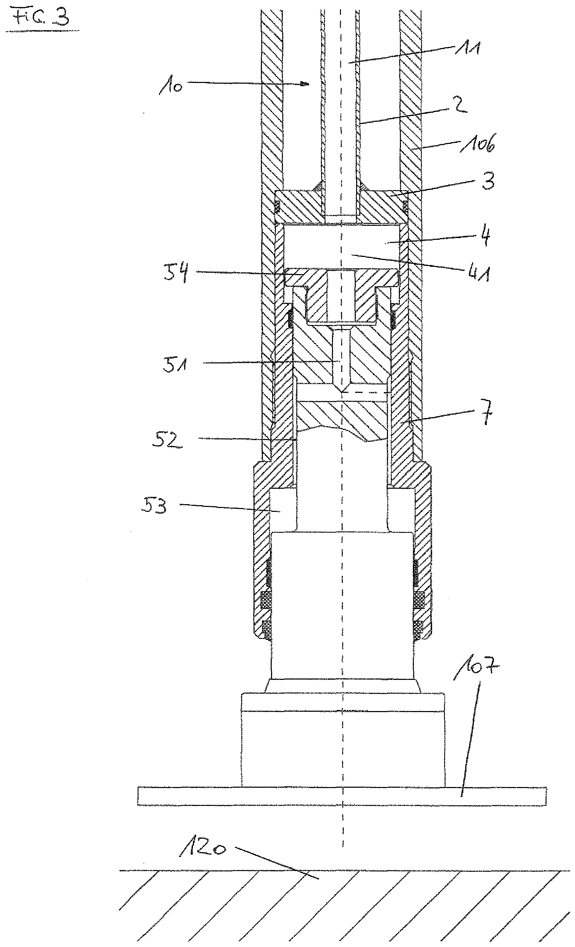

Der Messkolben 6 verfügt in diesem bevorzugten Ausführungsbeispiel weiters über einen Plungerdeckel 54, eine Plungerleitung 51, einen Plungerkanal 52 und eine weitere Plungerkammer 53 (Figur 3 und 4) welche mit der Kammer 4 verbunden sind, wodurch sich das verfügbare Volumen in der hydraulischen Kraftmessvorrichtung für das Arbeitsmedium vergrößert, was sich einerseits positiv auf die Genauigkeit der Messung auswirkt und andererseits positiv auf die Führung des Messkolbens 6 in der Führungseinheit auswirkt.

Beim Ausfahren der Abstützvorrichtung geht der Plungerdeckel 54 in der Kammer 4 auf Anschlag mit der Führungseinheit 7.

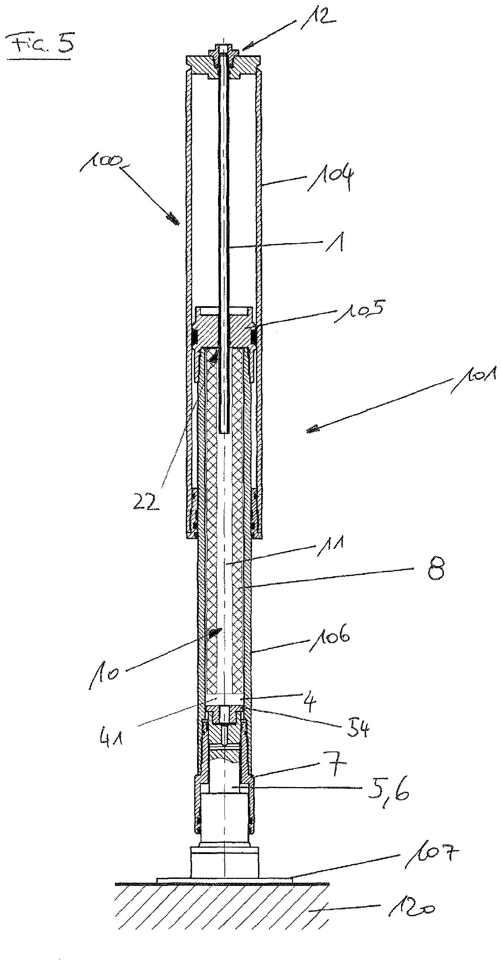

Figur 5 zeigt eine Variante einer hydraulisch bewegbaren Kolben-Zylinder-Einheit 101.

Der Unterschied zu dem vorangegangenen Beispiel der Figuren 1 bis 4 liegt hauptsächlich darin, dass das Rohr 2 hier kein separates Rohr ist, sondern die Kolbenstange 106 hier als Rohr 2 fungiert.

Dadurch, dass das Volumen 41 in der Kolbenstange 106 an sich viel größer wäre, als dies beim vorangegangenen Ausführungsbeispiel der Fall war, wird hier nun ein Füllrohr 8 im Inneren der Kolbenstange 106 der Kolben-Zylinder-Einheit 101 eingesetzt, um das verbleibende Volumen 41 für das Arbeitsmedium massiv zu verringern.

Dabei ist bevorzugt vorgesehen, dass das Füllrohr 8 einerseits aus Kunststoff ausgebildet ist und andererseits ist es angedacht, dieses Füllrohr 8 schwimmend in der Kolbenstange 106 der Kolben-Zylinder-Einheit 101 zu lagern. Ebenso ist es natürlich vorstellbar, dass man das Füllrohr 8 in der Kolbenstange 106 der Kolben-Zylinder-Einheit 101 befestigt, sei es an seinem zweiten Ende 22 ortsfest mit dem Kolben 105 oder mit dem anderen Ende ortsfest am Plungerdeckel 54.

Die Ermittlung der Abstützkraft, die auf die Abstützvorrichtung 100 wirkt, erfolgt auch hier an einem ersten Ende 12 des ersten Rohres 1 der Kraftmessvorrichtung 10.

Die wesentlichen Bestandteile der Kraftmessvorrichtung 10 sind in diesem Ausführungsbeispiel folgende:
- der Messaufnehmer 14 (siehe Fig. 1a und 1b),
- der zweite Hydraulikkreis 11 und dessen Arbeitsmedium,
- die beiden in einander verschachtelten Rohre 1 und 2 (hier also stellt das Rohr 2 die Kolbenstange 106 dar),
- der als Plunger 5 ausgebildete Messkolben 6,
- die in ihrem Volumen 41 veränderliche Kammer 4 und
- das Füllrohr 8 in der Kolbenstange 106.

Der zweite Hydraulikkreis 11 des Hydrauliksystems 102 ist hier als offener Kreis ausgebildet und erstreckt sich im Wesentlichen vom Messaufnehmer 14 zum ersten Rohr 1 und weiter zur Kammer 4 der Kolbenstange 106.

Durch die Ausbildung des Füllrohrs 8 in der Kolbenstange 106 kann das Volumen des Hydraulikkreises 11 in der Kolbenstange 106 für die Druckmessung gering gehalten werden, die Kompression des Arbeitsmediums und somit der Weg für die Messung wird damit möglichst kurz gehalten.

Ansonsten gilt bezüglich dieses Ausführungsbeispiels der Figur 5 sinngemäß alles bei den Figuren 1 bis 4 erwähnte, eben nur mit dem Unterschied, dass hier das zweite Rohr 2 als die Kolbenstange 106 ausgebildet ist.

Im Speziellen gilt also auch hier, dass eine hydraulisch teleskopierbare Abstützvorrichtung 100 für ein Fahrzeug 200 - insbesondere für einen fahrbaren Ladekran 201 - ausgebildet ist mit einer hydraulisch bewegbaren Kolben-Zylinder-Einheit 101 zum Aus- und Einfahren der Abstützvorrichtung 100 und einem Hydrauliksystem mit einem ersten Hydraulikkreis 103 zum Bewegen der Kolbenzylinder 100, 101 und einer hydraulischen Kraftmessvorrichtung 10 zur Ermittlung der Abstützkraft, die auf die Abstützvorrichtung 100 wirkt, wobei die hydraulische Kraftmessvorrichtung 10 einen zumindest während der Ermittlung der Abstützkraft eigenen, vom ersten Hydraulikkreis 103 des Hydrauliksystems 102 unabhängigen, zweiten Hydraulikkreis 11 aufweist.

Auch hier gilt, dass der zweite Hydraulikkreis 11 zumindest teilweise - vorzugsweise im Wesentlichen vollständig - innerhalb der Kolben-Zylinder-Einheit 101 ausgebildet ist.

Außerdem ist es hier ebenfalls der Fall, dass die Kraftmessvorrichtung 10 wenigstens zwei ineinander verschachtelte Rohre 1 und 2 aufweist, welche teleskopisch zu einander bewegbar ausgebildet sind. Dabei ist es bevorzugt vorgesehen, dass eines der wenigstens zwei in einander verschachtelten Rohre 1 oder 2 eine Kolbenstange 106 der Kolben-Zylinder-Einheit 101 ist.

Angemerkt sei, dass die schematischen Darstellungen einer hydraulisch teleskopierbaren Abstützvorrichtung 100 der Figuren 1a und 1b in gleichem Maße anwendbar sind auf das Ausführungsbeispiel der Figur 5 mit dem hier bereits erwähnten Unterschied, dass das Rohr 2 hier als Kolbenstange 106 ausgebildet ist.

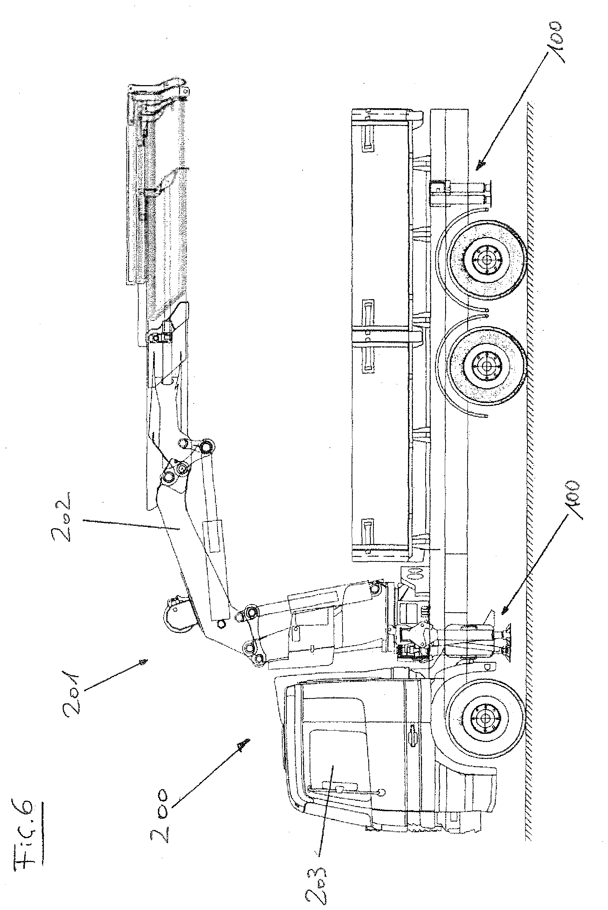

Figur 6 zeigt ein Fahrzeug 200, welches als Ladekran 101 ausgebildet ist. Dieses weist den Kran 202 und die Fahrerkabine 203 auf. Um das Fahrzeug 200 im Kranbetrieb abzustützen verfügt das Fahrzeug 200 über mehrere hydraulisch teleskopierbare Abstützvorrichtungen 100.

## Patentansprüche

1. Hydraulisch teleskopierbare Abstützvorrichtung (100) für ein Fahrzeug (200) - insbesondere für einen fahrbaren Ladekran (201) -, mit:
- einer hydraulisch bewegbaren Kolben-Zylinder-Einheit (101) zum Aus- und Einfahren der Abstützvorrichtung (100) und
- einem Hydrauliksystem mit einem ersten Hydraulikkreis (103) zum Bewegen der Kolben-Zylinder-Einheit (101) und
- einer hydraulischen Kraftmessvorrichtung (10) zur Ermittlung der Abstützkraft die auf die Abstützvorrichtung (100) wirkt,
**dadurch gekennzeichnet, dass** die hydraulische Kraftmessvorrichtung (10) einen zumindest während der Ermittlung der Abstützkraft eigenen, vom ersten Hydraulikkreis (103) des Hydrauliksystems (102) unabhängigen, zweiten Hydraulikkreis (11) aufweist.

2. Abstützvorrichtung nach Anspruch 1, **dadurch gekennzeichnet, dass** der zweite Hydraulikkreis (11) zumindest teilweise - vorzugsweise im Wesentlichen vollständig - innerhalb der Kolben-Zylinder-Einheit (101) ausgebildet ist.

3. Abstützvorrichtung nach Anspruch 1 oder 2, **dadurch gekennzeichnet, dass** die Kraftmessvorrichtung (10) wenigstens zwei ineinander verschachtelte Rohre (1, 2) aufweist welche teleskopisch zueinander bewegbar ausgebildet sind.

4. Abstützvorrichtung nach Anspruch 3, **dadurch gekennzeichnet, dass** die beiden ineinander verschachtelten Rohre (1, 2) dicht zur Kolben-Zylinder-Einheit (101) ausgebildet sind.

5. Abstützvorrichtung nach Anspruch 3 oder 4, **dadurch gekennzeichnet, dass** die Kolben-Zylinder-Einheit (101) einen Zylinder (104), einen Kolben (105) und eine Kolbenstange (106) aufweist, wobei eines der beiden Rohre (1, 2) ortsfest im Zylinder (104) der Kolben-Zylinder-Einheit (101) ausgebildet ist und das zweite Rohr (2) mit einem ersten Ende (21) ortsfest in der Kolbenstange (106) der Kolben-Zylinder-Einheit (101) ausgebildet ist.

6. Abstützvorrichtung nach einem der Ansprüche 3 bis 5, **dadurch gekennzeichnet, dass** das zweite Rohr (2) mit einem zweiten Ende (22) ortsfest im Kolben (105) der Kolben-Zylinder-Einheit (101) ausgebildet ist.

7. Abstützvorrichtung nach Anspruch 5 oder 6, **dadurch gekennzeichnet, dass** die Kraftmessvorrichtung (10) am ersten Ende (21) des zweiten Rohres (2) einen Deckel (3) mit einer Öffnung (31) zu einer in ihrem Volumen (41) veränderlichen Kammer (4) aufweist, wobei der Deckel (3) ortsfest in der Kolbenstange (106) der Kolben-Zylinder-Einheit (101) befestigt ist.

8. Abstützvorrichtung nach einem der Ansprüche 3 bis 7, **dadurch gekennzeichnet, dass** die Kraftmessvorrichtung (10) einen als Plunger (5) wirkenden Messkolben (6) aufweist der mit der Kolbenstange (106) der Kolben-Zylinder-Einheit (101) und mit der in ihrem Volumen (41) veränderlichen Kammer (4) korrespondiert.

9. Abstützvorrichtung nach Anspruch 3, **dadurch gekennzeichnet, dass** eines der wenigstens zwei ineinander verschachtelte Rohre (1, 2) eine Kolbenstange (106) der Kolben-Zylinder-Einheit (101) ist.

10. Abstützvorrichtung nach Anspruch 9, **dadurch gekennzeichnet, dass** eines im Inneren der Kolbenstange (106) der Kolben-Zylinder-Einheit (101) ein Füllrohr (8) ausgebildet ist.

11. Abstützvorrichtung nach Anspruch 10, **dadurch gekennzeichnet, dass** das Füllrohr (8) aus Kunststoff ausgebildet ist.

12. Abstützvorrichtung nach einem der Ansprüche 3 bis 11, **dadurch gekennzeichnet, dass** die Ermittlung der Abstützkraft, die auf die Abstützvorrichtung (100) wirkt, an einem ersten Ende (12) des ersten Rohres (1) erfolgt.

13. Fahrzeug (200) - insbesondere fahrbarer Ladekran (201) - mit wenigstens einer hydraulisch teleskopierbaren Abstützvorrichtung (100) nach einem der Ansprüche 1 bis 12.

## Claims

1. A hydraulically telescopic support device (100) for a vehicle (200), in particular for a mobile loading crane (201), comprising:
- a hydraulically moveable piston-cylinder unit (101) for extending and retracting the support device (100) and
- a hydraulic system comprising a first hydraulic circuit (103) for moving the piston-cylinder unit (101) and
- a hydraulic force measuring device (10) for determining the supporting force, which acts on the support device (100),
**characterised in that** the hydraulic force measuring device (10) has a dedicated second hydraulic circuit (11) which is separate at least during the determination of the supporting force and which is independent of the first hydraulic circuit (103) of the hydraulic system (102).

2. A support device as set forth in claim 1 **characterised in that** the second hydraulic circuit (11) is provided at least partially - preferably substantially completely - within the piston-cylinder unit (101).

3. A support device as set forth in claim 1 or claim 2 **characterised in that** the force measuring device (10) has at least two nested tubes (1, 2) which are adapted to be moveable telescopically relative to each other.

4. A support device as set forth in claim 3 **characterised in that** the two nested tubes (1, 2) are adapted to be sealed relative to the piston-cylinder unit (101).

5. A support device as set forth in claim 3 or claim 4 **characterised in that** the piston-cylinder unit (101) has a cylinder (104), a piston (105) and a piston rod (106), wherein one of the two tubes (1, 2) is provided stationarily in the cylinder (104) of the piston-cylinder unit (101) and the second tube (2) is provided stationarily with a first end (21) in the piston rod (106) of the piston-cylinder unit (101).

6. A support device as set forth in one of claims 3 through 5 **characterised in that** the second tube (2) is provided stationarily with a second end (22) in the piston (105) of the piston-cylinder unit (101).

7. A support device as set forth in claim 5 or claim 6 **characterised in that** at the first end (21) of the second tube (2) the force measuring device (10) has a cover (3) with an opening (31) to a chamber (4) which is variable in its volume (41), wherein the cover (3) is stationarily fixed in the piston rod (106) of the piston-cylinder unit (101).

8. A support device as set forth in one of claim 3 through 7 **characterised in that** the force measuring device (10) has a measuring piston (6) which acts as a plunger (5) and which corresponds to the piston rod (106) of the piston-cylinder unit (101) and the chamber (4) which is variable in its volume (41).

9. A support device as set forth in claim 3 **characterised in that** one of the at least two nested tubes (1, 2) is a piston rod (106) of the piston-cylinder unit (101).

10. A support device as set forth in claim 9 **characterised in that** a filling tube (8) is provided in the interior of the piston rod (106) of the piston-cylinder unit (101).

11. A support device as set forth in claim 10 **characterised in that** the filling tube (8) is of plastic.

12. A support device as set forth in one of claims 3 through 11 **characterised in that** the operation of determining the supporting force which acts on the support device (100) is effected at a first end (12) of the first tube (1).

13. A vehicle (200) - in particular a mobile loading crane (201) - having at least one hydraulically telescopic support device (100) as set forth in one of claims 1 through 12.

## Revendications

1. Dispositif d'appui (100) télescopique hydrauliquement pour un véhicule (200) - en particulier pour une grue de chargement mobile (201) -, avec:
- une unité piston-cylindre (101) mobile hydrauliquement pour le déploiement et la rétraction du dispositif d'appui (100) et
- un système hydraulique avec un premier circuit hydraulique (103) pour le déplacement de l'unité piston-cylindre (101) et
- un dispositif de mesure de force hydraulique (10) pour la détermination de la force d'appui qui agit sur le dispositif d'appui (100),
**caractérisé en ce que** le dispositif de mesure de force hydraulique (10) présente un deuxième circuit hydraulique (11) propre au moins pendant la détermination de la force d'appui, indépendant du premier circuit hydraulique (103) du système hydraulique (102).

2. Dispositif d'appui selon la revendication 1, **caractérisé en ce que** le deuxième circuit hydraulique (11) est réalisé au moins en partie - de préférence sensiblement entièrement - à l'intérieur de l'unité piston-cylindre (101).

3. Dispositif d'appui selon la revendication 1 ou 2, **caractérisé en ce que** le dispositif de mesure de force (10) présente au moins deux tubes imbriqués l'un dans l'autre (1, 2) lesquels sont réalisés de manière mobile télescopiquement l'un par rapport à l'autre.

4. Dispositif d'appui selon la revendication 3, **caractérisé en ce que** les deux tubes imbriqués l'un dans l'autre (1, 2) sont réalisés de manière étanche par rapport à l'unité piston-cylindre (101).

5. Dispositif d'appui selon la revendication 3 ou 4, **caractérisé en ce que** l'unité piston-cylindre (101) présente un cylindre (104), un piston (105) et une tige de piston (106), dans lequel un des deux tubes (1, 2) est réalisé de manière fixe dans le cylindre (104) de l'unité piston-cylindre (101) et le deuxième tube (2) est réalisé avec une première extrémité (21) de manière fixe dans la tige de piston (106) de l'unité piston-cylindre (101).

6. Dispositif d'appui selon l'une quelconque des revendications 3 à 5, **caractérisé en ce que** le deuxième tube (2) est réalisé avec une deuxième extrémité (22) de manière fixe dans le piston (105) de l'unité piston-cylindre (101).

7. Dispositif d'appui selon la revendication 5 ou 6, **caractérisé en ce que** le dispositif de mesure de force (10) présente à la première extrémité (21) du deuxième tube (2) un couvercle (3) avec une ouverture (31) sur une chambre (4) à volume (41) variable, dans lequel le couvercle (3) est fixé de manière fixe dans la tige de piston (106) de l'unité piston-cylindre (101).

8. Dispositif d'appui selon l'une quelconque des revendications 3 à 7, **caractérisé en ce que** le dispositif de mesure de force (10) présente un piston de mesure (6) agissant en tant que plongeur (5) qui correspond à la tige de piston (106) de l'unité piston-cylindre (101) et à la chambre (4) à volume (41) variable.

9. Dispositif d'appui selon la revendication 3, **caractérisé en ce qu'**un des au moins deux tuyaux imbriqués l'un dans l'autre (1, 2) est une tige de piston (106) de l'unité piston-cylindre (101).

10. Dispositif d'appui selon la revendication 9, **caractérisé en ce qu'**un un tube de remplissage (8) est réalisé à l'intérieur de la tige de piston (106) de l'unité piston-cylindre (101).

11. Dispositif d'appui selon la revendication 10, **caractérisé en ce que** le tube de remplissage (8) est réalisé en plastique.

12. Dispositif d'appui selon l'une quelconque des revendications 3 à 11, **caractérisé en ce que** la détermination de la force d'appui, qui agit sur le dispositif d'appui (100), a lieu à une première extrémité (12) du premier tube (1).

13. Véhicule (200) - en particulier grue de chargement mobile (201) - avec au moins un dispositif d'appui (100) télescopique hydrauliquement selon l'une quelconque des revendications 1 à 12.
